# EUROPEAN PATENT APPLICATION

(11) **EP 4 350 917 A1**
(43) Date of publication of application: **10.04.2024**
(21) Application number: 22199495.7
(22) Date of filing: 04.10.2022
(51) Int. Cl.: H02H 3/08, H02H 3/087, H02H 3/093, H02H 3/44

(54) **APPARATUS AND METHOD FOR CONDITIONING AN ELECTRICAL POWER SUPPLIED TO A LOAD**

(71) Applicant: Future Systems Besitz GmbH, 96472 Rödental (DE)
(72) Inventor: STEINBERGER, Philipp, 96450 Coburg (DE); FÖRST, Bernhard, 96317 Kronach (DE)
(74) Representative: Bratovic, Nino Maria

(57) **Abstract**

A power conditioning apparatus and method for conditioning an electrical power supplied by said power conditioning apparatus to a connected load, said power conditioning apparatus comprising a semiconductor switching stage through which the connected load receives a load current, I_{L}; a current mirror circuit adapted to mirror the load current, I_{L}, to generate a mirror current, I_{M}; and a current mirror evaluation circuit adapted to evaluate the generated mirror current, I_{M}, wherein the semiconductor switching stage is controlled in response to the evaluated mirror current, I_{M}, to condition the electrical power supplied to the connected load.

## Description

The invention relates to a power conditioning apparatus and a method for conditioning electrical power supplied by said power conditioning apparatus to a connected electrical load.

Electrical loads connected to a power supply system require in many use cases conditioning of the supplied electrical power, in particular to protect the connected electrical loads. Loads connected to the power supply system require overload and overcurrent protection. Further, electrical loads connected to a power supply system need to be turned on or turned off. As a consequence, electrical power supplied to the connected load has to be conditioned during a turn-on phase or a turn-off phase of the electrical load. A connected electrical load may comprise different operation modes requiring adaption or conditioning of the supplied electrical power.

Conventional electrical protection devices can employ current sensors to measure an electrical current flowing to the connected load to detect a critical situation and to trigger automatically an electronic or electromechanical switch in case that such a critical situation is detected. A current measurement element such as a Hall sensor may measure the electrical current and supply corresponding measurement values to an integrated controller which can switch off matching components of the protection device in case that the measured current values exceed a predetermined threshold value. Some conventional protection devices use semiconductor switches such as MOSFETs to protect connected loads against overcurrents or against overload.

However, these conventional electrical protection devices require the provision of sensor elements in the current supply path to measure the electrical current flowing to the connected electrical load. These sensor elements might lead to additional energy losses and limit the possibility of miniaturization of the respective electrical protection device.

Accordingly, it is an object of the present invention to provide a power conditioning apparatus and a corresponding method which allow to condition the electrical power supplied to the connected load without the provision of sensor elements in the power supply path.

This object is achieved according to a first aspect of the present invention by a power conditioning apparatus comprising the features of claim 1.

The invention provides according to a first aspect a power conditioning apparatus for conditioning an electrical power supplied by said power conditioning apparatus to a connected electrical load, said power conditioning apparatus comprising:
a semiconductor switching stage through which the connected load receives a load current,
a current mirror circuit adapted to mirror the load current to generate a mirror current and
a current mirror evaluation circuit adapted to evaluate the generated mirror current, wherein the semiconductor switching stage is controlled in response to the evaluated mirror current to condition the electrical power supplied to the connected load.

In a possible embodiment of the power conditioning apparatus according to the first aspect of the present invention, the semiconductor switching stage comprises at least one power switch controlled by a control signal provided by a driver circuit in response to the evaluated mirror current.

In a possible embodiment of the power conditioning apparatus according to the first aspect of the present invention, the power switch of the semiconductor switching stage comprises an integrated current mirror circuit.

In a further possible embodiment of the power conditioning apparatus according to the first aspect of the present invention, the power switch comprises a current sensing power MOSFET adapted to mirror the load current flowing through said current sensing power MOSFET to generate a mirror current with a predefined current mirror ratio.

In a further possible embodiment of the power conditioning apparatus according to the first aspect of the present invention, the current sensing power MOSFET comprises an embedded thermal sensor adapted to generate a temperature sensor signal supplied to a temperature evaluation circuit of said power conditioning apparatus.

In a still further possible embodiment of the power conditioning apparatus according to the first aspect of the present invention, the current mirror evaluation circuit comprises a sensor component adapted to generate an induction voltage corresponding to a current rise speed of the mirror current generated by the current mirror circuit and/or a sensor component adapted to generate a voltage corresponding to an amplitude of the mirror current generated by the current mirror circuit.

In a still further possible embodiment of the power conditioning apparatus according to the first aspect of the present invention, the sensor component of the current mirror evaluation circuit comprises a measurement coil adapted to generate an induction voltage corresponding to the current rise speed of the mirror current generated by said current mirror circuit.

In a further possible embodiment of the power conditioning apparatus according to the first aspect of the present invention, the sensor component of the current mirror evaluation circuit comprises a measurement resistor adapted to generate a voltage corresponding to the amplitude of the mirror current generated by the current mirror circuit.

In a further possible embodiment of the power conditioning apparatus according to the first aspect of the present invention, if the current rise speed of the mirror current measured by the measurement coil and/or if the amplitude of the mirror current measured by the measurement resistor exceed a predefined level, a charging current provided by a current source is triggered to charge a capacitor connected to the driver circuit of the power conditioning apparatus.

In a further possible embodiment of the power conditioning apparatus according to the first aspect of the present invention, a voltage of the charged capacitor is compared by a comparator with a predefined threshold voltage and if the voltage exceeds the threshold voltage a switch-off of the at least one power switch of the semiconductor switching stage is triggered automatically by said comparator.

In a still further possible embodiment of the power conditioning apparatus according to the first aspect of the present invention, the driver circuit comprises a high voltage side and comprises a low voltage side being galvanically separated from each other.

In a further possible embodiment of the power conditioning apparatus according to the first aspect of the present invention, the current source and/or the comparator are integrated on the high voltage side of the driver circuit.

In a further possible embodiment of the power conditioning apparatus according to the first aspect of the present invention, the current mirror evaluation circuit comprises for each power switch of said semiconductor switching stage an associated pair of serially connected sensor components including a measurement coil and a measurement resistor.

In a further possible embodiment of the power conditioning apparatus according to the first aspect of the present invention, a Zener diode is connected in parallel to each pair of sensor components to protect the associated power switch of the semiconductor switching stage against overvoltage spikes.

In a further possible embodiment of the power conditioning apparatus according to the first aspect of the present invention, an overvoltage protection circuit having a varistor is connected in parallel to the semiconductor switching stage to provide protection of the power switches of the semiconductor switching stage against overvoltage

In a further possible embodiment of the power conditioning apparatus according to the first aspect of the present invention, if the current rise speed of the mirror current measured by the measurement coil and/or if the amplitude of the mirror current, I_{M}, measured by the measurement resistor exceed a predefined level, a rectifier stage of the power conditioning apparatus is switched off such that a charging current provided by a current source flows into a capacitor for charging said capacitor.

In a still further possible embodiment of the power conditioning apparatus according to the first aspect of the present invention, the power switch of the semiconductor switching stage comprises a power MOSFET.

In a further possible embodiment of the power conditioning apparatus according to the first aspect of the present invention, the power switch of the semiconductor switching stage comprises an IGBT.

The invention further provides according to a second aspect a method for power conditioning of electrical power supplied to an electrical load comprising the features of claim 18.

The invention provides according to a second aspect a method for power conditioning of electrical power supplied to an electrical load, said method comprising:
mirroring a load current flowing through a semiconductor switching stage to the electrical load to generate a mirror current,
evaluating the generated mirror current by a current mirror evaluation circuit and
controlling the semiconductor switching stage by the current mirror evaluation circuit depending on the evaluated mirror current to condition the electrical power supplied to the connected load.

In the following, possible embodiments of the different aspects of the present invention are described in detail with reference to the enclosed figures.
- Fig. 1: shows a block diagram of a possible exemplary embodiment of a power conditioning apparatus according to the first aspect of the present invention;
- Figs. 2A, 2B: show block diagrams for illustrating possible exemplary embodiments of the power conditioning apparatus according to the first aspect of the present invention;
- Fig. 3: shows a circuit diagram for illustrating a possible exemplary embodiment of a power conditioning apparatus according to the first aspect of the present invention;
- Fig. 4: shows a circuit diagram for illustrating a possible exemplary embodiment of a current mirror evaluation circuit according to the first aspect of the present invention;
- Fig. 5: shows a further circuit diagram for illustrating a possible exemplary embodiment of a current mirror evaluation circuit according to the first aspect of the present invention;
- Fig. 6: shows a further circuit diagram for illustrating a possible exemplary embodiment of a current mirror evaluation circuit according to the first aspect of the present invention;
- Fig. 7: shows a further circuit diagram for illustrating a possible exemplary embodiment of a current mirror evaluation circuit according to the first aspect of the present invention;
- Fig.8: shows a block diagram of a possible embodiment of a driver circuit within a power conditioning apparatus according to the first aspect of the present invention.
- Figs. 9A, 9B,: show signal diagrams for illustrating an operation of a power conditioning apparatus according to the first aspect of the present invention;

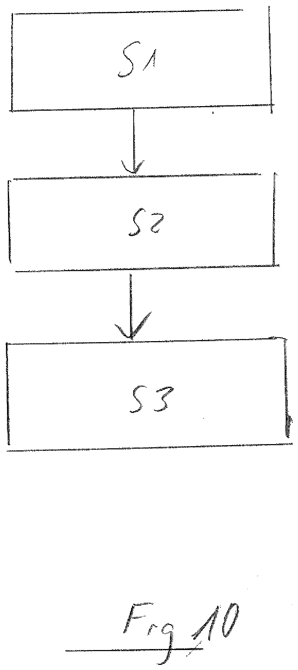

- Fig. 10: shows a flowchart for illustrating a possible embodiment of a method for conditioning electrical power according to a further aspect of the present invention;
- Fig.11: shows a senseFET equivalent circuit of a sense MOSFET used in a possible implementation of a switching stage ;

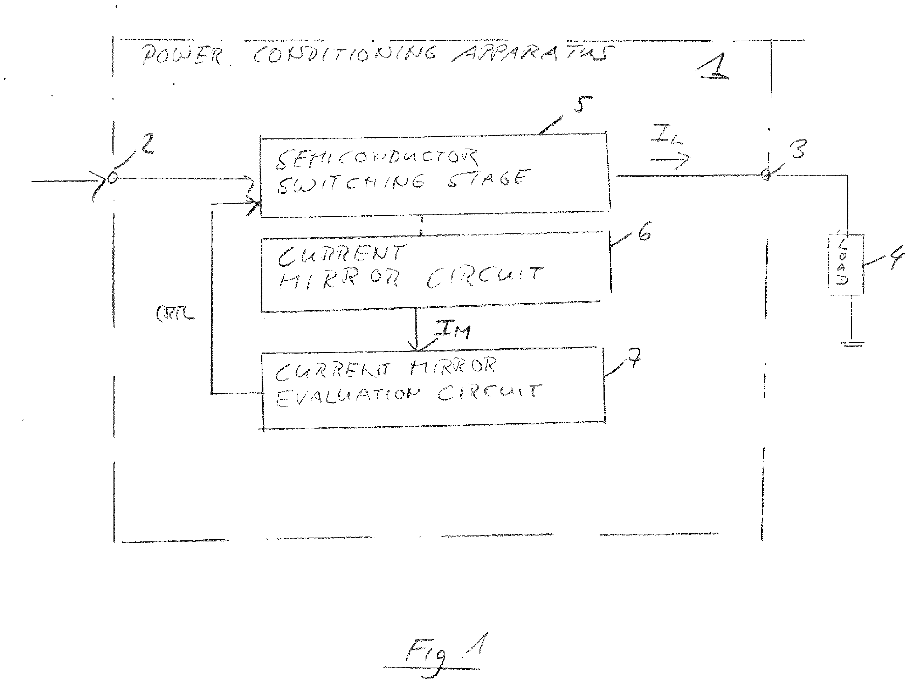

Fig. 1 illustrates schematically a possible exemplary embodiment of a power conditioning apparatus 1 according to the first aspect of the present invention. In the illustrated embodiment, the power conditioning apparatus 1 comprises an input terminal 2 and an output terminal 3. The power conditioning apparatus 1 receives at the input terminal 2 electrical power from a power supply system such as a public power supply grid or a power distribution apparatus. At the output terminal 3 of the power conditioning apparatus 1, an electrical load 4 is connected.

The power conditioning apparatus 1 comprises in the illustrated embodiment of Fig. 1 a semiconductor switching stage 5 provided in the power supply path between the input terminal 2 and the output terminal 3 of the power conditioning apparatus 1. A load current I_{L} flowing to the electrical load 4 connected to the output terminal 3 flows through the semiconductor switching stage 5 as shown in Fig. 1.

The power conditioning apparatus 1 comprises in the illustrated embodiment of Fig. 1 a current mirror circuit 6 adapted to mirror the load current I_{L} flowing through the semiconductor switching stage 5 to generate a mirror current I_{M} with a fixed transfer ratio between the load current I_{L} and the mirror current I_{M}.

The power conditioning apparatus 1 further comprises a current mirror evaluation circuit 7 connected to the current mirror circuit 6 and adapted to evaluate in real time the generated mirror current I_{M}. The semiconductor switching stage 5 is controlled by the current mirror evaluation circuit 7 in response to the evaluated mirror current I_{M} to condition the electrical power supplied to the connected load 4. The conditioning of the electrical power by the hardwired power conditioning apparatus 1 can involve the adjustment of the amplitude or time period of the electrical power, in particular an AC power supply phase. The conditioning can also comprise a shaping of the signal form of the electrical power. Because of the hardwired realisation the reaction of the power conditioning apparatus 1 to a changing power supply condition is fast. In the illustrated embodiment of Fig. 1, the power conditioning apparatus 1 comprises a single power supply path to provide electrical power to the connected electrical load 4. In other embodiments, the power conditioning apparatus 1 may comprise several power supply paths with a corresponding number of associated semiconductor switching stages 5 to provide electrical power by means of different electrical phases to the connected electrical load 4. The connected electrical load 4 may comprise a resistive load, a capacitive load or an inductive load such as an electrical motor.

The semiconductor switching stage 5 of the power conditioning apparatus 1 can comprise in a possible embodiment at least one power switch having a gate controlled by a control signal CRTL provided by a driver circuit 9 connected directly or indirectly to the current mirror evaluation circuit 7 in response to the evaluated mirror current I_{M}. In a preferred embodiment, the power switch of the semiconductor switching stage 5 can comprise an integrated current mirror circuit 6. In a possible embodiment, the power switch of the semiconductor switching stage 5 can comprise at least one current sensing power MOSFET 8 adapted to mirror the load current I_{L} flowing through the current sensing power MOSFET to generate the mirror current I_{M} with a predefined current mirror ratio. In a possible implementation, the current sensing power MOSFET 8 of the semiconductor switching stage 5 can comprise an embedded thermal sensor adapted to generate a temperature sensor signal supplied to a temperature evaluation circuit 11 of the power conditioning apparatus 1.

The current mirror evaluation circuit 7 of the power conditioning apparatus 1 can comprise in a possible embodiment a sensor component such as a coil adapted to generate an induction voltage corresponding to a current rise speed dI/dt of the mirror current I_{M} provided by the current mirror circuit 6. The current mirror evaluation circuit 7 can comprise in a further embodiment a sensor component such as a resistor adapted to generate a voltage corresponding to an amplitude of the mirror current I_{M} generated by the current mirror circuit 6. The sensor component of the current mirror evaluation circuit 7 can comprise in a possible implementation a measurement coil having a defined inductance adapted to generate an induction voltage corresponding to the current rise speed dI/dt of the mirror current I_{M} generated by the current mirror circuit 6. In a possible embodiment, the sensor component of the current mirror evaluation circuit 7 can also comprise a measurement resistor having a defined resistance adapted to generate a voltage corresponding to the amplitude of the mirror current I_{M} generated by the current mirror circuit 6.

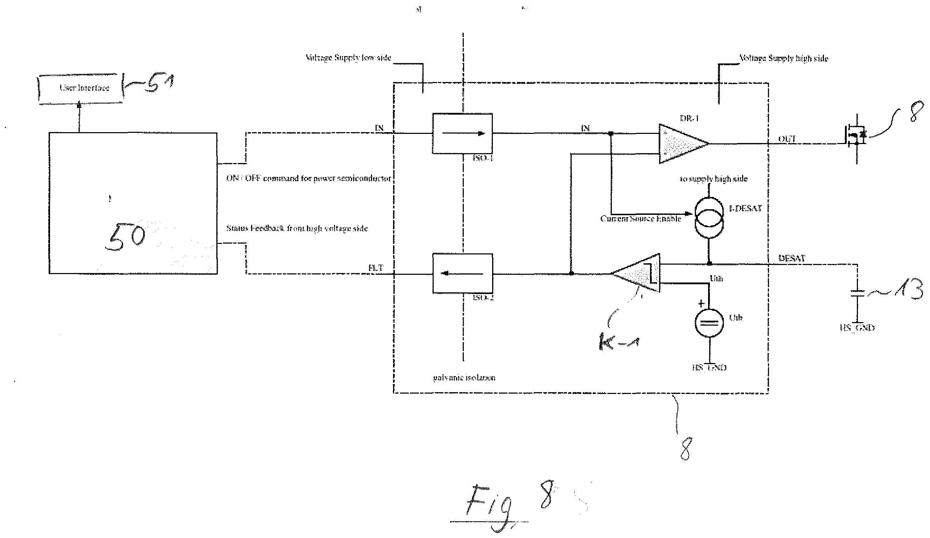

If the current rise speed dI/dt of the mirror current I_{M} measured by the measurement coil or if the amplitude of the mirror current I_{M} measured by the measurement resistor exceed a predefined level, a charging current provided by a current source I-DESAT is triggered to charge in a possible embodiment a capacitor 13 connected to the driver circuit 9 of the power conditioning apparatus 1. The voltage of the charged capacitor 13 can be compared in a possible embodiment by a comparator K-1 with a predefined threshold voltage. If the voltage of the charged capacitor 13 exceeds the predefined threshold voltage, a switch-off of the at least one power switch 8 of the semiconductor switching stage 5 can be automatically triggered by the comparator K-1. In a possible implementation, the current source I-DESAT and the comparator K-1 can be integrated on a high voltage side of the driver circuit 9 as shown in Fig.8. In a possible implementation, the driver circuit 9 comprises the high voltage side and a low voltage side where both sides are galvanically separated from each other as also illustrated in Fig.8. The low voltage side of the driver circuit 9 can in a possible embodiment be connected to a local controller comprising a microcontroller 50 integrated in the power conditioning apparatus 1 as shown in Fig.8.

In a possible embodiment of the power conditioning apparatus 1, the current mirror evaluation circuit 7 comprises for each power switch of the semiconductor switching stage 5 an associated pair of serially connected sensor components including a measurement coil and a measurement resistor. A Zener diode can be connected in parallel to each pair of sensor components to protect the associated power switch of the semiconductor switching stage 5 against overvoltage spikes. Further, an overvoltage protection circuit 12 can be provided. In a possible implementation, the overvoltage protection circuit 12 of the power conditioning apparatus 1 can comprise a varistor which is connected in parallel to the semiconductor switching stage 5 to provide protection of the power switches 8-1,8-2 of the semiconductor switching stage 5 against overvoltage and a free-wheeling path for the load current.

In a further possible embodiment, if the current rise speed dI/dt of the mirror current I_{M} measured by the measurement coil and/or if the amplitude of the mirror current I_{M} measured by the measurement resistor exceed a predefined level a rectifier stage 15 of the power conditioning apparatus 1 can be switched off such that a charging current provided by a current source flows into a capacitor 13 for charging the respective capacitor 13. In a possible embodiment, the power switches of the semiconductor switching stage 5 can comprise power MOSFETs 8. In an alternative implementation, the power switches of the semiconductor switching stage 5 can comprise IGBTs.

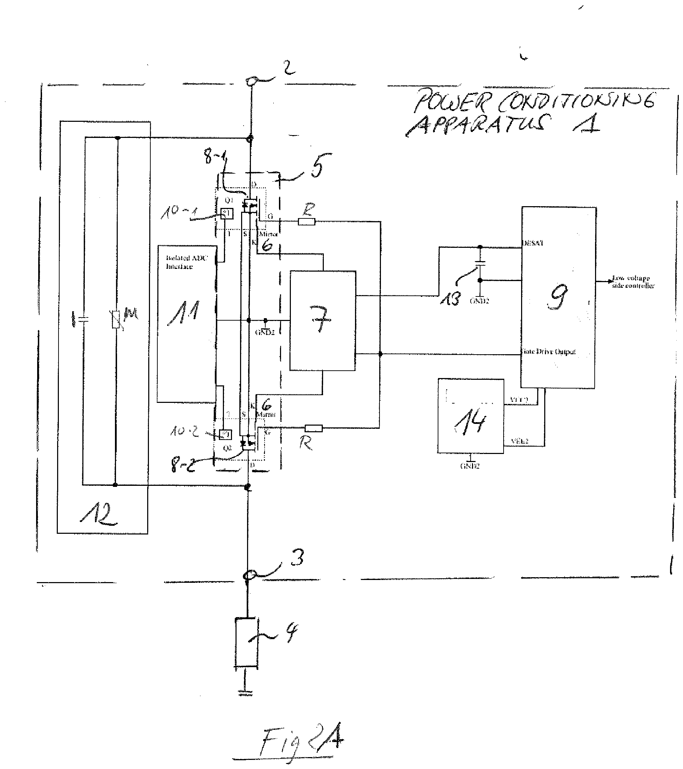

Fig. 2A shows a circuit diagram for illustrating a possible exemplary embodiment of the power conditioning apparatus 1 according to the first aspect of the present invention.

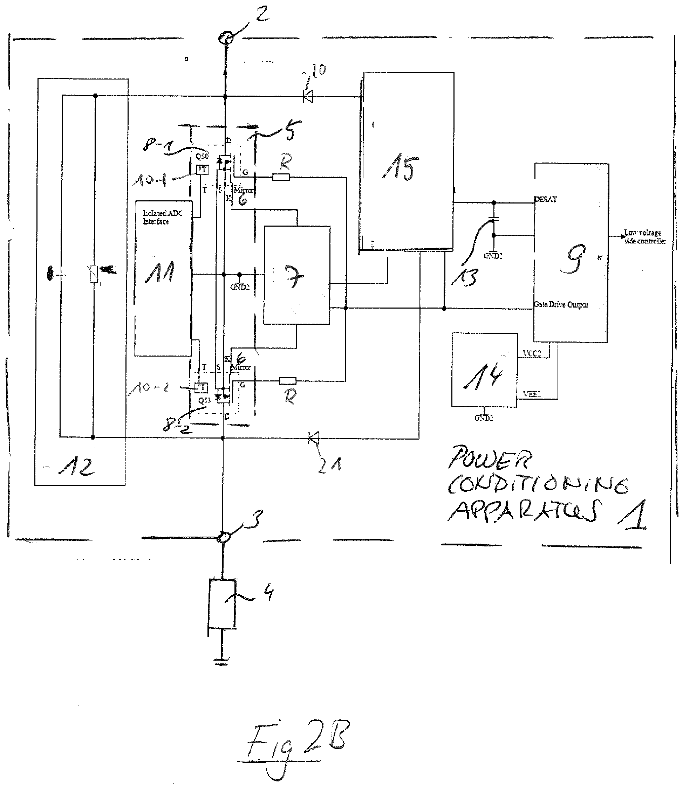

In the illustrated embodiment of Fig. 2, the power conditioning apparatus 1 comprises the semiconductor switching stage 5 including two serially connected MOSFETs 8-1, 8-2. In the illustrated embodiment of Fig. 2A, the power switches 8-i comprise current sensing power MOSFETs adapted to mirror the load current I_{L} flowing to the current sensing power MOSFETs 8-1, 8-2, respectively, to generate a mirror current I_{M} with a predefined current mirror ratio MR supplied to the current mirror evaluation circuit 7. In the embodiment illustrated in Fig. 2A, the current mirror circuit 6 is implemented by the provision of current sensing power MOSFETs 8-1, 8-2 within the semiconductor switching stage 5. As can be seen in Fig. 2A, the gates of the current sensing power MOSFETs 8-1, 8-2 are controlled by a gate driver output of an isolated gate driver circuit 9 of the power conditioning apparatus 1. In the illustrated embodiment of Fig. 2A, the current sensing power MOSFETs 8-1, 8-2 comprise each an embedded thermal sensor 10-1, 10-2 adapted to generate a temperature sensor signal supplied to a temperature evaluation circuit 11. The provision of this temperature evaluation circuit 11 is optional.

Further in the embodiment shown in Fig. 2A, the power conditioning apparatus 1 comprises an overvoltage protection circuit 12 having a varistor. The overvoltage protection circuit 12 is connected in parallel to the semiconductor switching stage 5 to provide protection of the power switches 8-1, 8-2 of the semiconductor switching stage 5 against overvoltage.

The current mirror evaluation circuit 7 illustrated in Fig. 2A can comprise sensor components connected to the current sensing power MOSFETs 8-1, 8-2 to receive the mirrored load current I_{M}. In a possible embodiment, the current mirror evaluation circuit 7 of the power conditioning apparatus 1 as shown in Fig. 2A comprises a sensor component adapted to generate an induction voltage corresponding to a current rise speed dI/dt of the mirror current I_{M} received from the current sensing power MOSFETs 8-1, 8-2. The current mirror evaluation circuit 7 can further comprise a sensor component adapted to generate a voltage corresponding to the amplitude of the mirrored current I_{M} provided by the current sensing power MOSFETs 8-1, 8-2. In a possible implementation, the sensor component integrated in the current mirror evaluation circuit 7 can comprise a measurement coil adapted to generate an induction voltage corresponding to the current rise speed dI/dt of the mirror current I_{M} provided by the current sensing power MOSFETs 8-1, 8-2. Further, the sensor component of the current mirror evaluation circuit 7 of the power conditioning apparatus 1 illustrated in Fig. 2A can comprise a measurement resistor adapted to generate a voltage corresponding to the amplitude of the mirror current I_{M} received from the current sensing power MOSFETs 8-1, 8-2. If the current rise speed dI/dt of the mirror current I_{M} measured by the measurement coil of the current mirror evaluation circuit 7 and/or if the amplitude of the mirror current I_{M} measured by the measurement resistor of the current mirror evaluation circuit 7 exceed a predefined level, a charging current provided by a current source is triggered to charge a capacitor 13 connected to the driver circuit 9 of the power conditioning apparatus 1 as shown in Fig. 2A. The voltage of the charged capacitor 13 can be compared by a comparator with a predefined threshold voltage. If the voltage of the capacitor 13 exceeds the threshold voltage, a switch-off of the at least one power switch 8-1, 8-2 of the semiconductor switching stage 5 is triggered by the comparator. In a preferred embodiment, the current source used for charging the capacitor 13 and the comparator used for comparing the voltage at the capacitor 13 with a threshold voltage are integrated on a high voltage side of the driver circuit 9 as also illustrated in Fig.8. In the illustrated embodiment of Fig. 2A, the driver circuit 9 receives its power supply from a bipolar floating high side supply circuit 14.

In the illustrated embodiment of Fig. 2A, the power conditioning apparatus 1 comprises a pair of current sensing power MOSFETs 8-1, 8-2 within the semiconductor switching stage 5.

The current sensing power MOSFETs 8-1, 8-2 can comprise transistor cells in parallel internally.

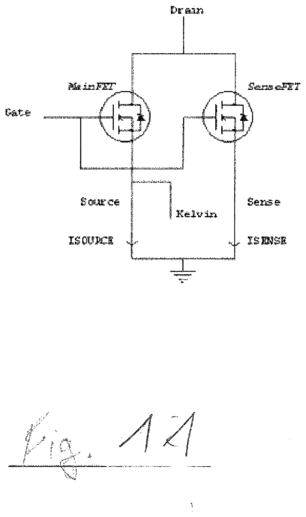

Fig. 11 illustrates the equivalent circuit of a current sensing power MOSFET 8-1, 8-2 as used in the embodiment of Fig. 2A. The elements within the power MOSFETs 8-1, 8-2 can be identical and the drain current can be shared equally between them. The more transistor cells are provided in parallel for a given chip area, the lower the on-resistance of the current sensing power MOSFET 8-1, 8-2 becomes. The current sensing power MOSFET 8-1, 8-2 can each be thought of as two transistors connected in parallel with a common gate and common drain but with separate sources as illustrated in Fig. 11. When the devices are turned on, the load current I_{L} can be shared in ratio of their on-resistances. The ratio of the electrical current flowing through the main FET and the current flowing through the sense FET forms the sense ratio of the current sensing power MOSFET 8. This sense ratio is defined as the condition where the source and sense terminals are held at the same electrical potential. An additional Kelvin connection to the source metallization of the current sensing power MOSFET 8 enables an accurate determination of the source potential. The current sensing power MOSFETs 8-1, 8-2 provide an effective way of measuring a load current I_{L} flowing to the electrical load 4. The separation is based on a matched devices principle. The on-resistance of individual source cells in the power MOSFET 8-1, 8-2 tends to be well-matched. Therefore, if several out of several thousands cells are connected to a separate sense pin, a ratio between the sense section on-resistance and the power section on-resistance is developed. When the sense FET device is turned on, an electrical current flow splits inversely with respect to the two resistances and a ratio between the electrical sense current and the source current is established. A separate source connection provides the mirroring. In a possible embodiment, the current sensing power MOSFET 8 can be designed such and the ratio between the mirror cells and source cells is on the order of 1:1000.

As illustrated in Fig. 11, the current sensing power MOSFET 8 can be equated with two parallel FETs with common gate and drain connections but with separate source leads. The relative size of the two separate devices equated within the current sensing power MOSFET 8 determines how the electrical current is split between the source and mirror terminals of the current sensing power MOSFET 8. The ratio of source current to mirror current is specified by MR, i.e. the current mirror ratio. The mirror ratio MR is defined for conditions where both source and mirror terminals are held at the same potential. Since the current mirror ratio MR can be in the order of e.g. 1000:1, the load current I_{L} flowing to the electrical load 4 is approximately equal to the source current and the current mirror ratio MR also indicates the ratio of load current I_{L} to the sense current. The mirror current I_{M} provided by each of the current sensing power MOSFETs 8-1, 8-2 is supplied to the current mirror evaluation circuit 7 as can be seen in Fig. 2A.

Fig. 2B illustrates a further exemplary embodiment of a power conditioning apparatus 1 comprising an additional rectifier stage 15. If the current rise speed dI/dt of the mirror current I_{M} measured by a measurement coil of the current mirror evaluation circuit 7 and/or if the amplitude of the mirror current I_{M} measured by a measurement resistor of the current mirror evaluation circuit 7 exceed a predefined level, the rectifier stage 15 of the power conditioning apparatus 1 can be switched off such that a charging current provided by the current source integrated in the driver circuit 9 does flow into the capacitor 13 for charging the respective capacitor 13. The remaining components of the power conditioning apparatus 1 illustrated in Fig. 2B correspond to the components illustrated in the embodiment of Fig. 2A. In a possible embodiment, if the MOSFET forward voltage becomes too big, then also the capacitor 13 is allowed to be charged by the current source. Consequently, both high dynamic and slow dynamic events can be evaluated to protect the MOSFETs 8-1, 8-2 from excess electrical stress. The maximum induced voltage can be limited e.g. by means of Zener Diodes in parallel to the inductive components to ensure that no power MOSFET 8-1, 8-2 is accidentally turned off or is operated in a linear mode. Different coils can be located inside the current mirror evaluation circuit 7. If the induced voltage on the coils becomes too high, the DESAT rectifier block 15 can be switched off automatically to allow the current source integrated in the gate driver circuit 9 to charge the capacitor 13.

The measurement coils are not provided within the main power supply path but within the separate current mirror evaluation circuit 7 thus reducing power dissipation. The mirrored current I_{M} provided by the current sensing power MOSFETs 8-i is a fixed fraction of the main current, i.e. the load current I_{L} flowing to the electrical load 4 connected to the output terminal 3 of the power conditioning apparatus 1.

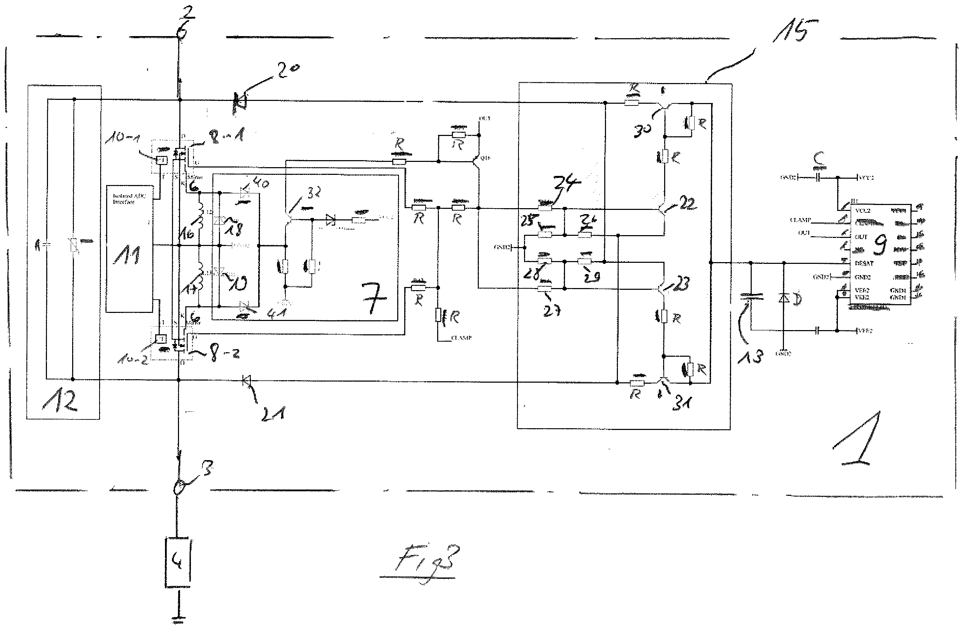

Fig. 3 shows a further exemplary implementation of a power conditioning apparatus 1 according to the first aspect of the present invention. Fig. 3 shows a possible implementation of the current mirror evaluation circuit 7 having two measurement coils 16, 17 connected serially between the mirror terminals of the power sensing MOSFETs 8-1, 8-2 as shown in Fig. 3. In the illustrated embodiment of Fig. 3, Zener diodes 18, 19 are connected in parallel to each pair of sensor components 16, 17 to protect the associated power switch of the semiconductor switching stage 5 against overvoltage spikes. The measurement coils 16, 17 can be adapted to measure a current rise speed dI/dt of the mirrored current I_{M} which is a fixed fraction of the main electrical current flowing to the electrical load 4. If the induced voltage of the measurement coils 16, 17 becomes too big, the rectifier stage 15 is automatically turned off allowing the current source integrated in the driver circuit 9 to charge the filtering capacitor 13 illustrated in Fig. 13. The comparator integrated in the driver circuit 9 compares the voltage along the capacitor 13 with a threshold voltage. If the voltage at the capacitor 13 exceeds the threshold voltage, the comparator integrated in the driver circuit 9 does automatically trigger a switch off of the power switches 8-1, 8-2 within the semiconductor switching stage 5.

As can be seen in Fig. 3 illustrating the rectifier stage 15 within the power conditioning apparatus 1 shown in Fig.2B, the rectifier stage 15 is connected via a diode 20 to the input terminal 2 and via a diode 21 to the output terminal 3 of the power conditioning apparatus 1. These diodes 20,21 are decoupling diodes. If the electrical current flows from the input terminal 2 towards the output terminal 3 the transistor 22 of the rectifier stage 15 is turned on and the transistor 23 is switched off. In contrast, if the current flows in the opposite direction from the output terminal 3 to the input terminal 2 the transistor 23 of the rectifier stage 15 is turned on whereas the transistor 22 of the rectifier stage 15 is switched off. Assuming a positive polarity on the mains terminal 2 and a current flow from terminal 2 to the load terminal 3 both power MOSFETs 8-1, 8-2 are turned on by a sufficient high gate-to-source voltage on the out terminal 3 to ground GND. Due to current flow, the mains terminal 3 potential with respect to ground GND is negative which turns on diode 21 and also transistor 22 is biased by resistors 24, 25, 26 in such a way that it is turned on. As a consequence, transistor 30 does connect diode 20 to the DESAT pin of the driver circuit 9. The control output of the driver circuit 9 controls the gates of the power MOSFETs 8-1, 8-2 within the switching stage 5. If the voltage potential is high (e.g. 15 Volt), MOSFETs 8-1, 8-2 are switched on. The transistor 23 of the rectifier stage 15 is biased by means of resistors 27, 28, 29 as illustrated in Fig. 3. Accordingly, for negative polarity, the mains terminal of the power conditioning apparatus 1 is working in a similar manner as for positive polarity, but now transistor 31 connects diode 21 to the DESAT input of the driver circuit 9.

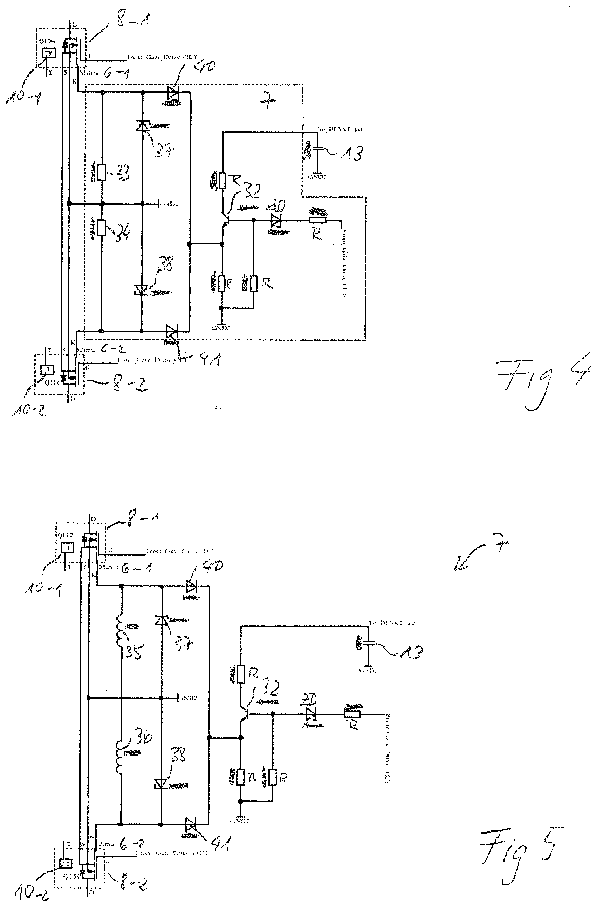

Fig. 4 shows a further possible implementation of a current mirror evaluation circuit 7 within a power conditioning apparatus 1 according to the present invention.

Fig. 4 illustrates a possible implementation of the current mirror evaluation circuit 7 as also used in the embodiment of Fig. 2A, i.e. an embodiment of the power conditioning apparatus 1 without the provision of a rectifier stage 15. The mirror current evaluation circuit 7 of Fig.4 comprises resistors 33, 34 adapted to measure an amplitude of the mirrored current.

Fig. 5 shows a further exemplary embodiment of a current mirror evaluation circuit 7 within an embodiment of the power conditioning apparatus 1 as illustrated in Fig.2A. In the illustrated implementation of Fig. 5, the current mirror evaluation circuit 7 comprises measurement coils 35, 36 adapted to measure a change dI/dt of the mirrored current.

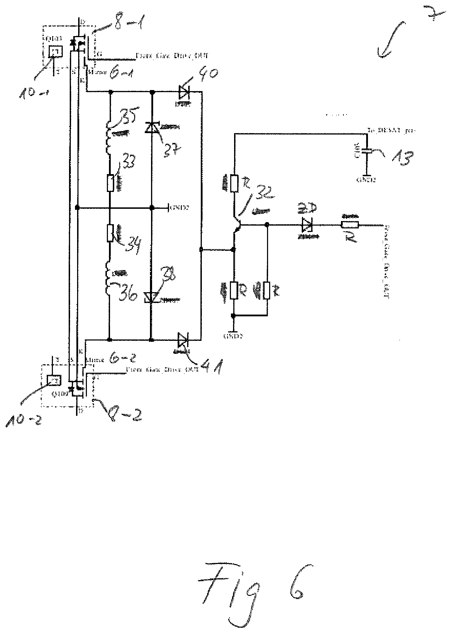

In the illustrated embodiment of Fig. 6, the current mirror evaluation circuit 7 of the power conditioning apparatus 1 as shown in Fig.2A comprises for each power switch 8-i of the semiconductor switching stage 5 an associated pair of serially connected sensor components including a measurement coil 35, 36 and a measurement resistor 33, 34. In the illustrated embodiment of Fig. 6, a Zener diode 37, 38 is connected parallel to each pair of sensor components to protect the associated power switch 8-i of the semiconductor switching stage 5 against overvoltage spikes.

In the embodiment of Fig. 6, the evaluation circuit 7 evaluates a superposition of the current rise speed dI/dt of the mirror current I_{M} measured by the measurement coil and of the amplitude of the mirror current I_{M} measured by the measurement resistor. If the current rise speed dI/dt of the mirror current I_{M} measured by the measurement coil and/or if the amplitude of the mirror current I_{M} measured by the measurement resistor exceeds a predefined level, a charging current provided by the current source integrated in the driver circuit 9 flows into the capacitor 13 for charging the capacitor 13 since the transistor 32 of the current mirror evaluation circuit 7 is cut off..

Fig. 6 illustrates an implementation of the current mirror evaluation circuit 7 within an embodiment of the power conditioning apparatus 1 according to the first aspect of the present invention as illustrated in Fig. 2A. During normal operation, the Zener diode 37is reversed biased for load current IL flowing from the input terminal 2 to the output terminal 3 of the power conditioning apparatus 1. Diodes 40, 41 are reverse biased. The transistor 32 is turned on and the current source inside the gate driver circuit 9 is shunted by transistor 32. If the current rise speed dI/dt and/or the current amplitude of the mirrored current I_{M} exceeds a predefined level, diodes 40, 41 become forward biased and the emitter voltage of transistor 32 is raised until the electrical current cuts off. As a consequence, the filtering capacitor 13 is charged by the current source of the driver circuit 9.

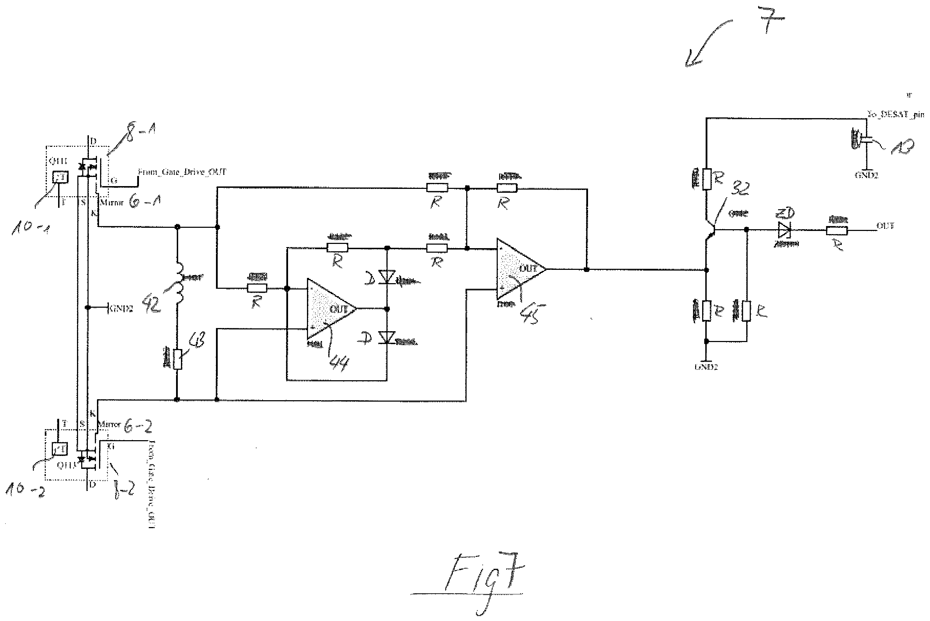

Fig. 7 illustrates a further possible exemplary embodiment of a current mirror evaluation circuit 7 within an embodiment of the power conditioning apparatus 1 according to the first aspect of the present invention as illustrated in Fig.2A. In the illustrated embodiment, the current mirror evaluation circuit 7 comprises a single inductor or coil 42 connected in series with a measurement resistor 43 between the mirror terminals 6-1,6-2 of the current sensing power MOSFETs 8-1, 8-2 of the semiconductor switching stage 5. The evaluation of the mirror current I_{M} is based on the use of operational amplifiers within the current mirror evaluation circuit 7. The current mirror evaluation circuit 7 comprises in the illustrated embodiment of Fig. 7 a first operation amplifier 44 and a second operation amplifier 45. The usage of the operational amplifiers 44, 45 allows a signal amplification. Both operational amplifiers 44, 45 form a measurement rectifier. In a possible embodiment of the power conditioning apparatus 1 the different implementations of the current mirror evaluation circuit 7 as illustrated in Figs.4,5,6,7 can be exchanged as a module for different use cases, e.g. use cases where only the amplitude of the load current IL is monitored (embodiment of Fig.4), where only the change of the amplitude is monitored (Fig.5) or where both the absolute amplitude I and the change of the amplitude dI/dt of the load current IL is monitored (Fig.6).

Fig.8 illustrates a possible embodiment of a driver circuit 9 within a power conditioning apparatus 1. The driver circuit comprises a low voltage side connected to a microcontroller 50 of the power condition apparatus 1 and comprises high voltage side connected to the gates of the power semiconductors 8-1, 8-2 provided in the main power supply path adapted to condition a flow of the electrical load current IL to the load 4.

ISO-1 block in Fig.8 is a galvanic isolation unit for signals from the low voltage side of the driver circuit 9 towards the high voltage side of the driver circuit 9. The ISO-1 block can be implemented by photo-couplers or small transformers. An on/off command for the gates of the MOSFETs given by the microcontroller 50 is shifted at the ISO-1 block from the low voltage side to the high voltage side of the driver circuit 9.

ISO-2 block in Fig. 8 is a galvanic isolation unit for signals from the high voltage side of the driver circuit 9 towards the low voltage side of the driver circuit 9. It can also be realized by photo-couplers or transformers. A fault signal FLT can be used to inform the microcontroller 50 about an error occurring on the high voltage side of the driver circuit 9.

The driver circuit 9 shown in Fig.8 comprises at its high voltage side a gate driver DR-1 which is disabled by a comparator K-1 if the voltage at capacitor 13 connected to the DESAT pin at the high voltage side of the driver circuit 9 exceeds a predefined threshold voltage UTH. The driver circuit 9 provides a low impedance/ high peak current output for gate control of the MOSFETs 8-1,8-2.

The driver circuit 9 provides a power semiconductor forward voltage drop supervision. If the power semiconductor, in particular a MOSFET, is turned on by setting a high level to the OUT pin of the driver circuit 9 a low current DC source I-DESAT being integrated in the driver circuit 9 on the high voltage side and being connected to drain-source terminals of the associated power semiconductors 8 is also turned on by a current source enable signal as illustrated in Fig.8.The voltage level at the DESAT pin of the driver circuit 9 which does correspond to the drain voltage level of the activated power semiconductor 8 is monitored by the comparator K-1 and compared with an adjustable threshold voltage UTH. Under normal lead condition the drain source voltage of the activated power transistor 8 is well below the threshold voltage UTH and the current source I-DESAT is shorted to HS-GND (high voltage side ground potential) by the associated power semiconductor 8. If the load current increases the voltage drop of the power semiconductor 8 increases accordingly until the comparator K-1 gets activated and consequently disables the gate driver DR-1. This disabling is realized without invoking low voltage side control and typically the gate remains latched of. The disabling of the power semiconductor 8 is performed in a loop on the high voltage side of the driver circuit 9 without involving the microcontroller 50 and can consequently be performed very fast, e.g. in a reaction time of less than 1- 10 microseconds. The microcontroller 50 gets a status feedback from the high voltage side of the driver circuit 9, in particular whether the power semiconductor 8, i.e. the MOSFET 8 has been turned on/off through the galvanic isolation unit ISO-2 of the driver circuit 9. This information can also be displayed on a user interface 51 of the power conditioning apparatus 1 connected to the microcontroller 50 of the power conditioning apparatus 1.

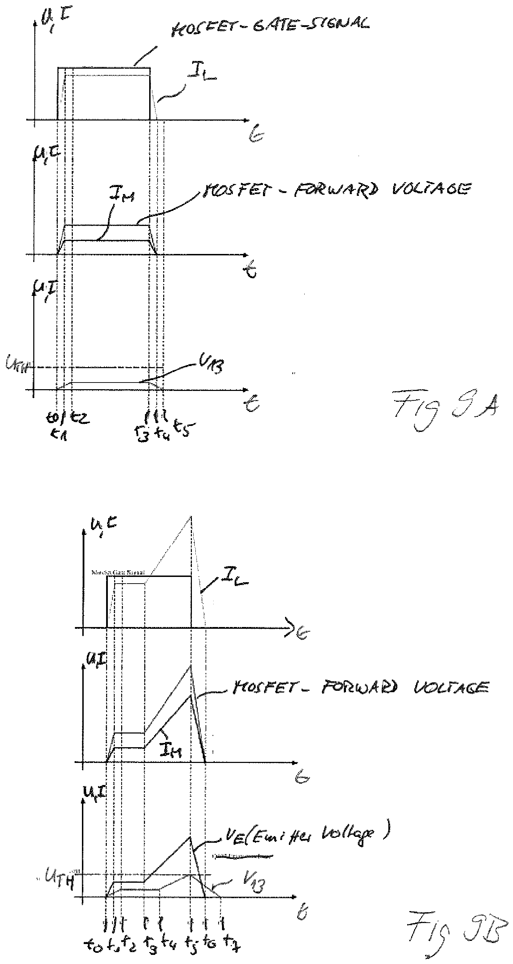

Figs. 9A, 9B, illustrate the operation of a power conditioning apparatus 1 according to the present invention.

Fig. 9A illustrated a normal switching operation of the power conditioning apparatus 1 with a load current IL flowing thought the power supply path of the power conditioning apparatus 1 to a connected load 4.

At time t0 the gates of the MOSFETs 8-1,8-2 are turned on by the gate drive output of the driver circuit 9 and the electrical load current starts to flow to the connected load 4.

At time t1 the load current IL and the mirror current IM reach their full amplitude as shown in the first and second diagram of Fig.9A.

At time t2 the voltage V13 at the capacitor 13 reaches its maximum.

At time t3 the gates of the MOSFETs 8-1, 8-2 are turned off and the load current IL starts to decrease.

At time t4 the load current IL has been decreased to zero.

At time t5 the capacitor 13 is completely discharged and its voltage V13 is zero.

Fig.9B illustrates the operation of a power conditioning apparatus 1 in case of an unforeseen event where the load current IL does increase significantly.

At time t0 the gates of the MOSFETs 8-1, 8-2 are turned on by the gate drive output of the driver circuit 9 and the electrical load current IL starts to flow to the connected load 4.

At time t1 the load current IL reaches its full rated amplitude and the mirror current IM does also reach its normal amplitude.

At time t2 the voltage V13 of the capacitor 13 does reach its steady state amplitude.

At time t3 load current IL and the MOSFET forward voltage starts to increase rapidly due to an event such as a short circuit or other failure during operation of the connected load 4.

At time t4 the turn-off condition for transistor 32 of the current mirror evaluation circuit 7 is reached and the capacitor 13 can be charged further leading to an increase of its voltage V13 as illustrated in the third diagram of Fig.9B.

At time t5 the voltage V13 of capacitor 13 reaches the threshold voltage UTH of the comparator K-1 triggering a switch off of the MOSFETs 8-1, 8-2 by the driver circuit 9.

At time t6 the amplitude of the load current IL has decreased to zero.

At time t7 the capacitor 13 has been fully discharged and its voltages V13 becomes zero.

The reaction time period between time t3 and time t5 can in a possible embodiment be in a range between 1 microsecond and 10 microseconds. The reaction time period for reaction to the event occurring a time t3 depends inter alia on the capacity C of the capacitor 13 and the current strength of the current source integrated in the driver circuit 9. In a possible embodiment the capacity C of the capacitor 13 can be adjusted depending on the use case. The capacity C may comprise several nF.

Fig. 101 illustrates a flowchart of a possible exemplary embodiment of a method for power conditioning of electrical power supplied to an electrical load 4 according to the second aspect of the present invention. In the illustrated embodiment, the method comprises three main steps.

In a first step S1, a load current IL flowing through a semiconductor switching stage 5 to the electrical load 4 is mirrored to generate a mirror current I_{M}.

In a further step S2, the generated mirror current I_{M} is evaluated by a current mirror evaluation circuit 7.

In a final step S3, the semiconductor switching stage 5 is controlled by the current mirror evaluation circuit 7 depending on the evaluated mirror current I_{M} to condition the electrical power supplied to the connected load 4. The power conditioning apparatus 1 can be provided between a power supply system and a load 4. The power supply system can comprise an AC power supply system comprising one or more AC power supply phases L. The power conditioning apparatus 1 can also in a possible embodiment be integrated on the input side of an electrical load 4 being connected to a power supply system.

The power conditioning apparatus 1 can in a possible embodiment comprise additional entities, in particular a user interface with a display unit adapted to display a momentary state of the semiconductor switching stage 5, i.e. whether the power supply path is interrupted or not. Further, in a possible embodiment, the threshold values used by the comparator integrated in the driver circuit 9 can be adjusted via the user interface of the power conditioning apparatus 1. In this way, it is possible to adjust the sensitivity of the power conditioning apparatus 1 to the respective use case.

The user interface can be connected to a local controller of the power conditioning apparatus 1. This local controller can be connected to a low voltage side of the driver circuit 9. The local controller can in a possible embodiment comprise a data memory and a configuration memory. In a possible implementation the mirrored current applied to the current mirror evaluation circuit 7 is also digitized by an analog to digital converter ADC to provide mirror current data samples stored in the data memory of the local controller for further processing. In a possible embodiment the power supply path comprises besides the semiconductor switching stage 5 also a serially connected electromechanical stage having a relay controlled by the local controller of the power protection apparatus 1.

In a possible embodiment the mirrored current is evaluated by the hardwired current mirror evaluation circuit 7 of the power protection apparatus 1 to provide a fast reaction to events or faults such as overcurrent or overload or to provide a fast reaction to changing power supply conditions. In a possible embodiment the digitized mirrored current is at the same time in parallel evaluated by the local controller comprising a microcontroller 50 to provide additional safety, in particular if the current mirror evaluation circuit 7 itself fails. The mirror current IM can be digitized by an analog to digital converter ADC and mirror current samples provided by the ADC can be stored in a data memory of the microcontroller 50. The local microcontroller 50 can switch off the Mosfets 8-1, 8-2 of the power supply path if the monitored digitized mirrored current exceeds a threshold value.

Since the sensor components of the current mirror evaluation circuit 7 have only to measure the mirrored current I_{M} which is a fraction of the load current I_{L}, the size of the sensor components used in the current mirror evaluation circuit 7 can be very small thus allowing to miniaturize the power conditioning apparatus 1. Further, the power dissipated by the measurement components is minimal because of their small size. The power supply path is set up with absolute minimum amount of components. In a possible embodiment the load current IL flowing to the load 4 during normal operation of the power condition apparatus 1 may comprise more than 10 Ampere. At these high load current amplitudes the provision of sensor components within the main power supply path is hardly feasible because these high load current amplitudes would require large sensor components in the main power supply path which cannot be easily integrated and which involve large fabrication efforts and which cause high electrical power losses during operation.

## Claims

1. A power conditioning apparatus for conditioning an electrical power supplied by said power conditioning apparatus to a connected load,
said power conditioning apparatus (1) comprising:
- a semiconductor switching stage (5) through which the connected load (4) receives a load current, I_{L};
- a current mirror circuit (6) adapted to mirror the load current, I_{L}, to generate a mirror current, I_{M}; and
- a current mirror evaluation circuit (7) adapted to evaluate the generated mirror current, I_{M},
wherein the semiconductor switching stage (5) is controlled in response to the evaluated mirror current, I_{M}, to condition the electrical power supplied to the connected load (4).

2. The power conditioning apparatus according to claim 1 wherein the semiconductor switching stage (5) comprises at least one power switch (8) controlled by a control signal provided by a driver circuit (9) in response to the evaluated mirror current, I_{M}.

3. The power conditioning apparatus according to claim 2 wherein the power switch (8) comprises an integrated current mirror circuit.

4. The power conditioning apparatus according to claim 3 wherein the power switch (8) comprises a current sensing power MOSFET adapted to mirror the load current, I_{L}, flowing through said current sensing power MOSFET to generate a mirror current, I_{M}, with a predefined current mirror ratio.

5. The power conditioning apparatus according to claim 4 wherein the current sensing power MOSFET comprises an embedded thermal sensor (10) adapted to generate a temperature sensor signal supplied to a temperature evaluation circuit (11) of said power conditioning apparatus (1).

6. The power conditioning apparatus according to any of the preceding claims 1 to 5 wherein the current mirror evaluation circuit (7) comprises a sensor component adapted to generate an induction voltage corresponding to a current rise speed, dI/dt, of the mirror current, I_{M}, generated by the current mirror circuit (6) and/or a sensor component adapted to generate a voltage corresponding to an amplitude of the mirror current, I_{M}, generated by the current mirror circuit (6).

7. The power conditioning apparatus according to claim 6 wherein the sensor component of the current mirror evaluation circuit (7) comprises a measurement coil adapted to generate an induction voltage corresponding to the current rise speed, dI/dt, of the mirror current, I_{M}, generated by said current mirror circuit (6).

8. The power conditioning apparatus according to claim 6 wherein the sensor component of said current mirror evaluation circuit (7) comprises a measurement resistor adapted to generate a voltage corresponding to the amplitude of the mirror current, I_{M}, generated by said current mirror circuit (6).

9. The power conditioning apparatus according to claim 7 and 8 wherein if the current rise speed, dI/dt, of the mirror current measured by the measurement coil and/or if the amplitude of the mirror current measured by the measurement resistor exceed a predefined level, a charging current provided by a current source is triggered to charge a capacitor (13) connected to the driver circuit (9) of the power conditioning apparatus (1).

10. The power conditioning apparatus according to claim 9 wherein a voltage of the charged capacitor (13) is compared by a comparator (K-1) with a predefined threshold voltage (UTH) and if the voltage exceeds the threshold voltage a switch-off of the at least one power switch (8) of the semiconductor switching stage (5) is triggered by said comparator (K-1).

11. The power conditioning apparatus according to any of the preceding claims wherein the driver circuit (9) comprises a high voltage side and a low voltage side being galvanically separated from each other.

12. The power conditioning apparatus according to claim 11 wherein the current source (I-DESAT) and/or the comparator (K-1) are integrated on the high voltage side of the driver circuit (9).

13. The power conditioning apparatus according to any of the preceding claims wherein the current mirror evaluation circuit (7) comprises for each power switch (8) of said semiconductor switching stage (5) an associated pair of serially connected sensor components including a measurement coil and a measurement resistor.

14. The power conditioning apparatus according to claim 13 wherein a Zener diode is connected in parallel to each pair of sensor components to protect the associated power switch (8) of the semiconductor switching stage (5) against overvoltage spikes.

15. The power conditioning apparatus according to any of the preceding claims wherein an overvoltage protection circuit (12) having a varistor is connected in parallel to the semiconductor switching stage (5) to provide protection of the power switches (8) of the semiconductor switching stage (5) against overvoltage and to provide a free-wheeling path for load current.

16. The power conditioning apparatus according to any of the preceding claims wherein if the current rise speed, dI/dt, of the mirror current, I_{M}, measured by the measurement coil and/or if the amplitude of the mirror current, I_{M}, measured by the measurement resistor exceed a predefined level, a rectifier stage (15) of the power conditioning apparatus (1) is switched off such that a charging current provided by a current source flows into a capacitor (13) for charging said capacitor (13).

17. The power conditioning apparatus according to any of the preceding claims wherein the power switch (8) of the semiconductor switching stage (5) comprises a power MOSFET or an IGBT.

18. A method for power conditioning of electrical power supplied to an electrical load,
said method comprising:
- mirroring (S1) a load current, I_{L}, flowing through a semiconductor switching stage (5) to the electrical load (4) to generate a mirror current, I_{M};
- evaluating (S2) the generated mirror current, I_{M}, by a current mirror evaluation circuit (7); and
controlling (S3) the semiconductor switching stage (5) by the current mirror evaluation circuit (7) depending on the evaluated mirror current, I_{M}, to condition the electrical power supplied to the connected load (4).
